# FASCICULE DE BREVET EUROPEEN

(11) **EP 3 074 638 B1**
(45) Date de publication et mention de la délivrance du brevet: **14.02.2024**
(21) Numéro de dépôt: 14814953.7
(22) Date de dépôt: 26.11.2014
(51) Int. Cl.: F04D 29/32, F01D 5/30, F01D 5/34

(54) **SOUFFLANTE POUR UNE TURBOMACHINE**
GEBLÄSE FÜR EINE TURBOMASCHINE
FAN FOR A TURBO ENGINE

(30) Priorité: 29.11.2013 FR 1361905
(43) Date de publication de la demande: 05.10.2016
(73) Titulaire: Safran Aircraft Engines, 75015 Paris (FR)
(72) Inventeur: JABLONSKI, Laurent, 77550 Moissy Cramayel Cedex (FR); JOLY, Philippe, Gérard, Edmond, 77550 Moissy Cramayel Cedex (FR); PERDRIGEON, Christophe, 77550 Moissy Cramayel Cedex (FR); MERLOT, Damien, 77550 Moissy Cramayel Cedex (FR); POHIER, Hervé, 77550 Moissy Cramayel Cedex (FR)
(74) Mandataire: Ernest Gutmann - Yves Plasseraud S.A.S.
(86) Numéro de dépôt international: PCT/FR2014/053035
(87) Numéro de publication internationale: WO 2015/079163

(56) Documents cités:
- EP-A1- 1 624 169
- EP-A1- 2 128 450
- EP-A2- 1 340 903
- FR-A1- 2 974 863
- FR-A1- 2 975 449
- Thierry Dubois: "GE's Passport 20 Engine Is On Time To Power New Globals | Aviation International News", AINonline, 14 mai 2012 (2012-05-14), XP055134636, Extrait de l'Internet: URL:http://www.ainonline.com/aviation-news /ebace-convention-news/2012-05-14/ges-pass port-20-engine-time-power-new-globals [extrait le 2014-08-13]
- Curt Epstein: "GE's Passport 20 Engine Program Is On Schedule for 2016 Entry into Service | Aviation International News", AINonline, 22 octobre 2013 (2013-10-22), XP055134656, Extrait de l'Internet: URL:http://www.ainonline.com/aviation-news /nbaa-convention-news/2013-10-22/ges-passp ort-20-engine-program-schedule-2016-entry- service [extrait le 2014-08-13]
- Guy Norris: "GE Passport Takes Shape | AWIN content from Aviation Week", Aviation Week, 11 octobre 2011 (2011-10-11), XP055134642, Extrait de l'Internet: URL:http://aviationweek.com/awin/ge-passpo rt-takes-shape-0 [extrait le 2014-08-13]
- Ge Aviation: "CF34-8C turbofan propulsion system", , 1 May 2010 (2010-05-01), pages 1-2, XP055785707, Retrieved from the Internet: URL:https://www.geaviation.com/sites/defau lt/files/datasheet-CF34-8C.pdf [retrieved on 2021-03-15]

## Description

La présente invention concerne l'obtention d'un dimensionnement particulier d'une soufflante, en particulier pour une turbomachine, telle qu'un turboréacteur.

L'invention relève d'un réel défi technique, et présente un intérêt tout particulier lorsqu'elle concerne des turbomachines dont les dimensions extérieures ont été prévues pour s'adapter au domaine de l'aviation d'affaire. Typiquement, ces turbomachines, de relativement petite taille, présentent un diamètre d'entrée, défini par le diamètre en amont de la veine de turbomachine, compris entre 900 mm et 1550 mm, afin de présenter des dimensions étroitement liées à une totale et adaptées à un montage sur des avions de type jets d'affaire. Les documents suivants sont représentatifs de la technique de l'art antérieur:
- FR 2 974 863 A1,
- Thierry Dubois: "GE's Passport 20 Engine Is On Time To Power New Globals Aviation International News", AINonline, 14 mai 2012 (2012-05-14), enregistrement OEB XP055134636
Extrait de l'Internet: URL:http://www.ainonline.com/aviation-news/ebace-conventionnews/2012-05-14/ges-passport-20-engine-time-power-newglobals [extrait le 2014-08-13]

Comme sur tout type de turbomachine, les développements concernant ce type de turbomachine de petite taille portent essentiellement sur l'amélioration des performances, une réduction de la consommation et un gain en masse. Les axes de développement sont en ce sens nombreux et peuvent par exemple concerner des choix de matériaux, l'étude des formes des aubes, une optimisation des liaisons mécaniques entre les pièces, la prévention des fuites, etc.

Un des axes de développement généralement suivi consiste en la réduction du rapport de moyeu de la soufflante de turbomachine. Ce rapport de moyeu est le rapport entre le diamètre externe du moyeu en bord d'attaque des aubes de soufflante, et le diamètre du cercle ou passent les extrémités radiales de ces aubes de soufflante. La diminution du rapport de moyeu implique généralement une diminution radiale de la taille de moyeu, et donc un gain de masse, mais implique aussi une augmentation de la section d'aspiration de la turbomachine, impliquant une augmentation du débit d'air propulsant la turbomachine, et donc un gain de performances. Toutefois, compte tenu du savoir faire actuel dans la conception et la fabrication des turbomachines de petite taille, telles que celles possédant un diamètre d'entrée défini ci-dessus, ce type de turbomachine est considéré comme n'autorisant pas une réduction du diamètre externe du moyeu, particulièrement en bord d'attaque des aubes de soufflante, en dessous du diamètre actuellement utilisé qui est typiquement compris entre 570 et 585 mm. En effet, les dimensions actuelles des éléments mécaniques composant le moyeu sont considérées comme non réductibles, principalement pour des considérations évidentes de tenue mécanique radiale des aubes, de résistance en torsion, de tolérances et de méthodes de fabrication, d'accessibilité par les outils, etc.

Allant à l'encontre de ces préjugés techniques, l'invention propose un choix de dimensionnement particulier d'une soufflante de turbomachine offrant un gain notable en performances et en masse.

A cet effet, l'invention propose une soufflante pour turbomachine selon la revendication 1 ou selon la revendication 2.

Selon un premier mode de réalisation (correspondant à la revendication 2), le moyeu comprend un disque de soufflante formé d'une seule pièce avec les aubes.

Selon un second mode de réalisation (correspondant à la revendication 1), le moyeu comprend un disque de soufflante comportant à sa périphérie externe des nervures sensiblement axiales formées en alternance avec des rainures dans lesquels sont engagés les pieds des aubes.

Il est donc proposé un diamètre d'entrée de valeur comprise entre 900 mm et 1200 mm, afin de procurer des résultats particulièrement avantageux en termes de masse. Comme il sera expliqué par la suite, le choix particulier d'un tel diamètre externe est l'objet d'un préjugé technique d'autant plus important.

De plus, il est proposé un agencement mécanique spécifique du rotor de cette soufflante qui est particulièrement bien adapté à ce choix de dimensionnement.

Généralement, le rotor d'une soufflante d'une turbomachine comporte un disque formé d'une seule pièce avec des aubes, ou portant à sa périphérie externe des aubes dont les pieds sont engagés dans des rainures sensiblement axiales de la périphérie externe du disque.

Dans le cas ou les aubes sont engagées sur le disque, les aubes sont retenues radialement sur le disque par coopération de formes de leurs pieds avec les rainures du disque, les pieds d'aubes étant par exemple du type en queue d'aronde. Des plates-formes inter-aubes sont montées sur le disque entre les aubes de soufflante. Le disque est généralement équipé de poireaux d'équilibrage s'étendant radialement vers l'intérieur.

Dans la technique actuelle, les aubes sont maintenues axialement sur le disque par des moyens qui sont montés sur le disque, en amont et en aval des aubes, et qui empêchent les pieds d'aube de se déplacer axialement dans les rainures du disque.

Les moyens de maintien situés en aval des aubes comprennent par exemple au moins un crochet du pied d'aube qui est engagé dans une encoche usinée sur une partie d'extrémité amont du compresseur basse pression agencé en aval de la soufflante. Afin de permettre le montage de ces crochets dans les encoches du compresseur basse pression, il est nécessaire d'agrandir radialement les rainures du disque par rapport aux pieds d'aubes. Ainsi, il est possible de déplacer axialement les aubes au fond des rainures et de positionner les crochets des pieds d'aube en alignement radial en regard des encoches. On peut ensuite surélever radialement les aubes dans les rainures à l'aide de cales suffisamment épaisses, agencées au fond des rainures, afin d'engager les crochets des pieds d'aubes dans les encoches et de maintenir les aubes en position haute.

Les moyens de maintien situés en amont comprennent par exemple un flasque annulaire rapporté et fixé sur l'extrémité amont du disque. Le flasque est monté coaxialement sur le disque et comporte une partie festonnée coopérant avec une partie festonnée correspondante du disque. Ce flasque bloque axialement la bague sur le disque et est immobilisé en rotation par rapport au disque. La périphérie externe du flasque prend appui axialement sur les pieds d'aube pour leur retenue axiale vers l'aval, sa périphérie interne étant appliquée et fixée sur une bride annulaire correspondante du disque. La périphérie externe du flasque comporte en outre des pions d'accrochage des extrémités amont des plates-formes inter-aubes.

Une virole de forme sensiblement tronconique montée sur le disque, en amont des aubes, délimite intérieurement la veine annulaire d'entrée d'air dans la turbomachine. Cette virole comporte au voisinage de son extrémité aval une bride annulaire radialement interne qui est appliquée axialement sur le flasque précité et qui est fixée avec le flasque sur la bride du disque par des boulons.

Un capot tronconique est en outre monté sur la virole précitée, à la partie amont de celle-ci, par l'intermédiaire d'autres boulons, engagés dans des trous des brides du capot et de la virole et qui sont situés radialement à l'intérieur des boulons de fixation de la virole sur le disque.

Que ce soit pour un disque formé d'une seule pièce avec les aubes, ou pour un disque comprenant des rainures où sont engagées les aubes, le disque est fixé à un arbre d'entraînement aval par l'intermédiaire d'une bride annulaire radiale du disque fixée à une bride annulaire radiale de l'arbre à l'aide d'une série d'écrous alignés circonférentiellement et vissés axialement à travers les brides.

Pour réaliser le montage et le démontage du rotor de soufflante, il est nécessaire de pouvoir accéder axialement à ces écrous avec un outil. Pour cela, l'opérateur doit disposer d'un espace suffisant autour de l'axe central. Dans le cas où la soufflante est de petit diamètre, et en particulier dans le cas où le rapport de moyeu de la soufflante est celui évoqué dans cette demande de brevet, la structure décrite ci-dessus de l'art antérieur ne permet pas d'accéder aux écrous précités. En effet, les poireaux d'équilibrage du disque sont dans ce cas formés dans l'alignement axial des écrous, et réduisent fortement l'espace disponible autour de l'axe central en amont de l'arbre d'entrainement pour l'accès aux écrous.

Par ailleurs, les efforts transmis par l'arbre au disque sont intégralement supportés par les brides précitées boulonnées, qui sont des éléments particulièrement sensibles aux déformations et aux ruptures dans la chaîne de transmission du couple de l'arbre jusqu'au disque de soufflante. Dans le cas évoqué ci-dessus, les dimensions radiales et circonférentielles de ces brides étant très réduites, il existe de forts risques de déformation et de rupture de ces dernières en fonctionnement.

Que ce soit pour un disque formé d'une seule pièce avec les aubes, ou pour un disque comprenant des rainures où sont engagées les aubes, l'art antérieur n'autorise donc pas, en conformité avec le préjugé technique évoqué, à former une soufflante de dimension et de rapport de moyeu définis par l'invention.

Le document EP 1 357 254 divulgue également un rotor de soufflante dont la structure présente un encombrement radial et axial important.

Apporter une solution simple, efficace et économique à ce problème est un but ici recherché, y compris en tant que tel, éventuellement indépendamment des contraintes de diamètre d'entrée et de rapport de moyeu précités et revendiqués.

A cet effet, il est proposé qu'il soit prévu une transmission de couple entre le disque de soufflante et un arbre d'entrainement aval centré sur le même axe, ladite transmission de couple étant assurée par l'intermédiaire d'une rangée annulaires de cannelures axiales du disque coopérant avec une rangée annulaire de cannelures axiales de l'arbre.

Préférentiellement, les cannelures du disque sont formées sur la surface intérieure d'une paroi cylindrique du disque, la dite paroi cylindrique entourant l'arbre d'entrainement.

Selon une autre caractéristique, la surface cylindrique est formée à l'extrémité aval du disque et est reliée au reste du disque par l'intermédiaire d'une paroi tronconique s'évasant vers l'amont.

Avantageusement, au moins un épaulement annulaire est formé sur la surface de l'arbre d'entrainement, et est en appui axial par l'aval contre une butée du disque.

Les butées peuvent être formées par l'extrémité aval de la paroi cylindrique et/ou un rebord annulaire radial s'étendant à l'intérieur de la paroi tronconique.

Préférentiellement, un écrou est monté sur un filetage de la surface externe de l'extrémité amont de l'arbre, et forme un appui axial depuis l'amont sur au moins une butée du disque, de manière à maintenir la butée serrée axialement entre ledit écrou et un épaulement de l'arbre.

L'écrou possède typiquement un diamètre compris entre 105 mm et 135 mm, et de préférence compris entre 115 mm et 125 mm.

La structure définie ci-dessus propose une méthode de transmission du couple plus résistante que celle impliquant des brides radiales boulonnées. En effet, alors qu'une liaison par brides implique la présence de parois radiales relativement fragiles en flexion et la présence de boulons engagés dans un nombre limité d'orifices où se concentrent les efforts le long de la circonférence des brides, la liaison par cannelures permet de répartir le couple sur toute la circonférence de parois cylindriques cannelées apte à mieux supporter d'importantes charges en flexion.

Que ce soit pour un disque formé d'une seule pièce avec les aubes, ou pour un disque comprenant des rainures où sont engagées les aubes, la structure définie ci-dessus résout donc le problème de tenue mécanique entre l'arbre de transmission et le disque, dans le cadre de la soufflante de dimension et de rapport de moyeu définis par l'invention.

Le rotor de soufflante décrit ci-dessus, dont la conception proposée est directement liée au choix de rapport de moyeu effectué dans le cadre de la réalisation de turbomachine de petite taille, a de plus été développé en lien avec l'environnement technique décrit ci-après. Cet environnement proposé par les inventeurs permet notamment de former un agencement particulier du rotor de soufflante qui procure une solution de montage du disque sur l'arbre d'entrainement, afin d'obtenir la liaison cannelée exprimée dans cette demande de brevet.

Le choix particulier du rapport de moyeu évoqué dans cette demande de brevet implique en effet une réduction générale des dimensions du disque de soufflante de la turbomachine par rapport à l'art antérieur. Ce disque présente un diamètre externe dont la valeur est alors typiquement comprise entre 245 et 275 mm. Dans le cas où les aubes sont engagées sur le disque, il reste cependant nécessaire que ce disque réponde aux contraintes relatives au maintien en fonctionnement des aubes de soufflante, dont le nombre et les dimensions restent relativement identiques par rapport à l'art antérieur. A cet effet le nombre d'aube est préférentiellement compris entre 17 et 21 aubes, et plus particulièrement entre 18 et 20 aubes. La hauteur et la largeur des rainures du disque, doivent de plus, selon les connaissances de la technique actuelle, ne pas subir de réduction de dimensions, afin d'une part de permettre l'engagement des crochets aval de maintien axial des aubes évoqués dans cette demande, et d'autre part d'être adaptées à la taille des pieds d'aube dont les dimensions n'ont pas été réduites afin de supporter les aubes en rotation.

Les exigences simultanées de conservation des dimensions des rainures du disque, et de réduction du diamètre général du disque, impliquent alors forcément une diminution de la largeur, c'est-à-dire de la dimension circonférentielle, des nervures du disque. Les nervures du disque de soufflante, alors plus fines que dans l'art antérieur proposant un rapport de moyeu plus élevé, présentent de ce fait une plus grande fragilité et un plus grand risque de rupture, par rapport au couple supporté en fonctionnement, que les nervures de l'art antérieur.

Afin de remédier à ce problème, il a été proposé de former le disque de soufflante en un alliage d'inconel, très résistant. Cet alliage est toutefois très lourd, ce qui nuit aux performances globales de la turbomachine, et ne constitue donc pas une solution satisfaisante.

Dans le cadre du rotor de soufflante décrit ci-dessus, il a été remarqué, de manière inattendue, que lorsque les aubes sont engagées sur le disque, le blocage axial des aubes opéré par un agencement particulier du disque, d'un flasque de rétention amont au disque, d'un anneau et d'un capot de soufflante, cet ensemble ayant été développé par les inventeurs, était suffisamment efficace et résistant pour se passer du blocage axial opéré par les crochets aval des pieds d'aube engagés dans le compresseur basse-pression, au regard d'une turbomachine dont les dimensions ont été précisées précédemment.

Cet agencement particulier de blocage axial des aubes consiste en un capot annulaire monté sur le disque en amont des aubes, et des moyens de retenue axiale des aubes sur le disque comportant un flasque monté dans une gorge annulaire du disque et formant un appui axial des pieds des aubes, le flasque comportant un rebord annulaire radial festonné et coopérant avec un rebord annulaire radial festonnée de la gorge annulaire du disque, de manière à assurer un blocage axial du flasque dans la gorge annulaire du disque, et des moyens d'immobilisation en rotation du flasque, comportant un anneau pourvu d'oreilles s'étendant radialement vers l'intérieur et formées avec des moyens de fixation sur une face radiale amont du disque, ledit capot étant fixé sur le disque par des moyens de fixation communs aux moyens de fixation d'au moins certaines oreilles de l'anneau sur le disque, l'anneau comportant en outre au moins une saillie radiale coopérant avec une butée complémentaire du flasque, de manière à bloquer en rotation le flasque par rapport à l'anneau.

Les inventeurs ont donc avantageusement supprimé le crochet aval de blocage axial des aubes, et ont par conséquent eu la possibilité de réduire la hauteur radiale des rainures du disque de soufflante, dont une part était précédemment réservée au montage des crochets aval, à une hauteur typiquement comprise entre 18 et 22 mm.

La réduction de la dimension radiale des rainures implique directement une réduction radiale des nervures qui autorise à former la face interne de ce disque avec un profil d'équilibrage issu d'un alésage de forme tronconique coaxial à l'axe de la soufflante, et dont le rayon augmente d'amont en aval. Ce profil d'équilibrage, en plus de bien équilibrer le disque de soufflante, présente un diamètre minimum, en amont, de valeur typiquement comprise entre 120 et 140 mm, ce qui est plus grand que le diamètre minimum du profil d'équilibrage à poireaux utilisé pour les rainures de plus grande hauteur, à diamètre externe du disque équivalent.

Ce nouveau profil d'équilibrage du disque offre un plus grand espace annulaire au milieu du disque de soufflante pour le passage axial d'outils nécessaires au montage et au serrage du disque de soufflante sur l'arbre d'entrainement de la turbomachine, au moyen d'un agencement faisant intervenir une liaison par cannelures, comme il est décrit dans la présente demande de brevet.

En outre, la réduction de dimension radiale des rainures du disque de soufflante leur confère des proportions alors plus compacts et résistant mieux aux couples de flexion en fonctionnement. Grâce à la solution ici présentée, la structure des nervures du disque de soufflante offre donc une structure suffisamment résistante pour être formée en alliage de titane bien plus léger qu'un alliage d'inconel.

Il est ainsi possible de proposer, pour le cas d'un rotor de soufflante comprenant des aubes engagées sur un disque, que ledit rotor de soufflante soit dépourvu de moyens de rétention axiale des aubes de soufflante sur le disque de soufflante, en aval des aubes. Ce rotor de soufflante comprend seulement comme moyen de rétention axiale des aubes le flasque amont tel que décrit dans la présente demande de brevet. Cette particularité est particulièrement pertinente dans le cadre de soufflantes pour turbomachines de petites tailles relatives à l'invention, et présentant les dimensions et le rapport de moyeu décrit précédemment. On propose donc ici, pour ce type de soufflante, de former le disque de soufflante en alliage de titane, plus particulièrement un alliage de type TA6V ou TA17 (TA5CD4).

Par ailleurs, encore un autre aspect du présent sujet concerne, dans le cas d'une réalisation non monobloc du disque et des aubes, les cales qui sont alors usuellement utilisées en fonds de rainures pour maintenir les aubes en hauteur contre les nervures. Ces cales doivent alors assurer les fonctions consistant à limiter le débattement des pieds d'aube dans les rainures en fonctionnement, à protéger les fonds des rainures, et à amortir les aubes en cas de leur rupture ou lors de l'ingestion d'un corps volumineux par la turbomachine. Afin de respecter ces contraintes de façon optimale, notamment dans le nouveau contexte décrit ci-dessus, en particulier dans le cadre de la réduction de dimension radiale des rainures évoquée dans cette demande de brevet, la présente demande de brevet propose une cale qui a été radialement amincie par rapport aux solutions préexistantes, et qui présente une épaisseur radiale typiquement comprise entre 1 et 3 mm, plus particulièrement égale à 2 mm, étant précisé qu'une telle cale pourrait être prévue même hors des contraintes de diamètre d'entrée et de rapport de moyeu précitées et revendiquées. Chaque cale se présente plus particulièrement sous la forme d'une planche à deux faces, allongée selon l'axe de la soufflante et pouvant être posée contre le fond d'une des rainures. Préférentiellement, cette cale est symétrique dans les trois directions axiales, radiales, et circonférentielle, ce qui évite d'éventuelles erreurs de montage. Chaque face de la cale possède avantageusement des bords latéraux, ou circonférentiels, chanfreinés, les chanfreins formant chacun un angle de 10°, plus ou moins 2°, avec une face. Selon une autre particularité, les chanfreins de chaque face radialement en vis-à-vis se rejoignent aux extrémités latérales de la cale de manière à former les deux bords latéraux de la cale. Les angles de jonction entre les faces de la cale et les chanfreins peuvent être adoucis de manière à présenter une courbure de rayon compris entre 1,50 mm et 1, 80 mm, et plus particulièrement comprise entre 1,60 mm et 1,70 mm, et préférentiellement égal à 1,65 mm. Les angles de jonctions entre les chanfreins formant les bords latéraux de la cale peuvent être adoucis de manière à présenter une courbure de rayon compris entre 0,45 mm et 0,75 mm, et plus particulièrement compris entre 0,52 mm et 0,68 mm, et préférentiellement égal à 0,6 mm. Selon une réalisation particulière, chaque cale possède une dimension latérale comprise entre 17,0 mm et 18,2 mm, et plus particulièrement égale à 17,6 mm.

Les différents aspects des solutions ici présentées seront mieux compris et d'autres détails, caractéristiques et avantages de ceux-ci apparaîtront plus clairement à la lecture de la description qui suit faite à titre d'exemple non limitatif et en référence aux dessins annexés, dans lesquels :
- la figure 1 est une vue en perspective avec arrachage partielle d'une turbomachine selon la technique antérieure,
- la figure 2 est une demi-vue schématique partielle en coupe axiale d'une soufflante de turbomachine selon la technique antérieure,
- la figure 3 est une demi-vue schématique partielle en coupe axiale, à l'échelle, d'une soufflante de turbomachine selon l'invention, et pour le cas où les aubes sont engagées dans des rainures du disque,
- la figure 4 est une demi-vue schématique partielle en coupe axiale, à l'échelle, d'une soufflante de turbomachine selon l'invention, et pour le cas où les aubes sont formées d'une seule pièce avec le disque,
- la figure 5 est une vue en perspective d'un rotor de soufflante actualisé avec arrachage du capot, pour le cas de la figure 3,
- la figure 6 est une vue de l'avant du même ensemble que celui de la figure 5,
- les figures 7, 8 et 9 sont des vues respectives des coupes A-A, B-B et C-C de la figure 6,
- la figure 10 est une vue en perspective d'une cale utilisée dans la soufflante selon l'invention, pour le cas de la figure 3,
- la figure 11 est une vue en coupe transversale de la même cale.

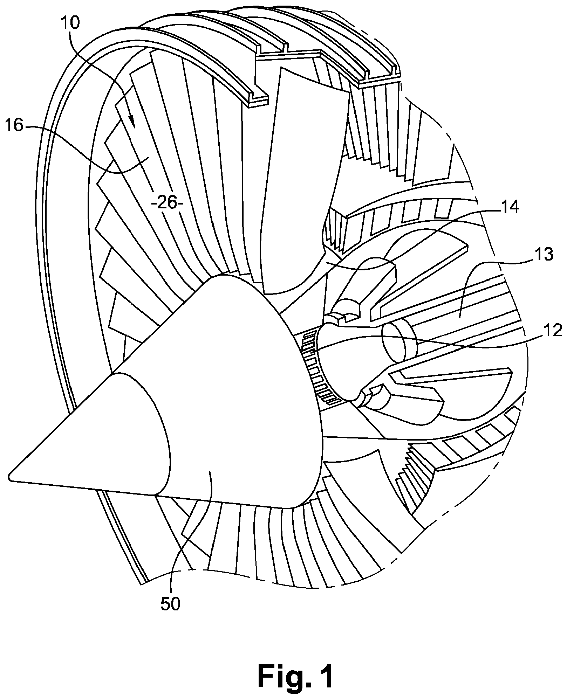

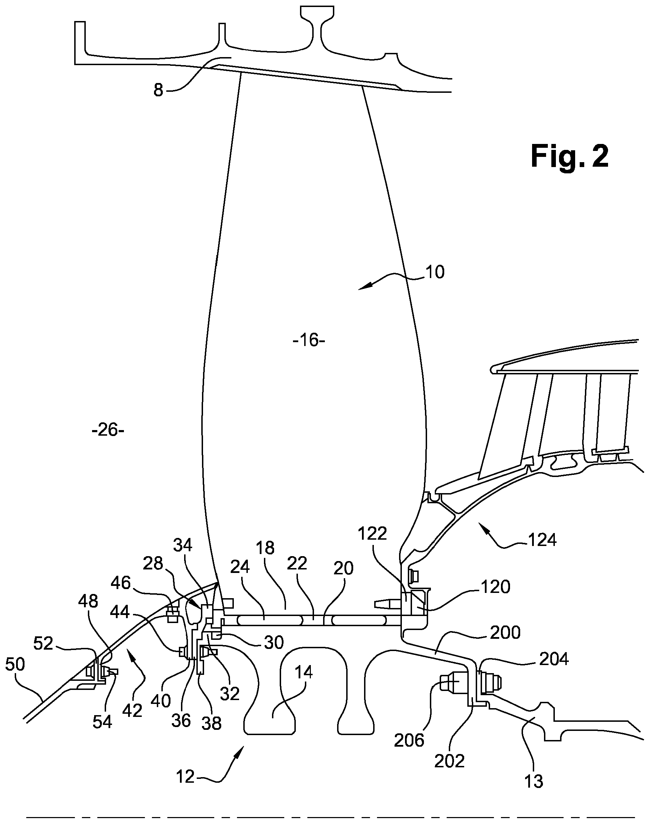

On se réfère d'abord aux figures 1 et 2 qui représentent donc une soufflante de turbomachine selon la technique antérieure à la présente invention.

Cette soufflante comprend des aubes 10 portées par un disque 12, entourées par un carter annulaire externe 8, et entre lesquelles sont intercalées des plates-formes (non représentées) inter-aubes, le disque 12 étant fixé à l'extrémité amont d'un arbre 13 de turbomachine.

Chaque aube 10 de soufflante comprend une pale 16 raccordée à son extrémité radialement interne à un pied 18 qui est engagé dans une rainure 20 sensiblement axiale de forme complémentaire du disque 12, formée entre deux nervures 22 du disque 12, et permettant de retenir radialement cette aube 10 sur le disque 12. Une cale 24 est intercalée entre le pied 18 de chaque aube 10 et le fond de la rainure 20 correspondante du disque 12 pour immobiliser radialement l'aube 10 sur le disque 12. Des poireaux 14 s'étendant vers l'intérieur de la soufflante sont formés sur la surface interne du disque 12 afin d'équilibrer le disque 12.

Le disque 12 comprend une paroi tronconique 200 se refermant vers l'aval et qui s'étend depuis une portion du disque 12 située radialement entre les rainures 20 et les poireaux 14. La paroi tronconique 200 comprend à son extrémité aval une bride annulaire radiale 202 comportant des orifices axiaux coopérant avec des orifices axiaux d'une bride annulaire radiale 204 formée en amont de l'arbre 13 d'entrainement, pour le passage de boulons 206.

Les plates-formes inter-aubes forment une paroi qui délimite intérieurement une veine 26 du flux d'air entrant dans la turbomachine, et comprennent des moyens qui coopèrent avec des moyens correspondants prévus sur le disque 12, entre les rainures 20, pour fixer les plates-formes sur le disque.

Les aubes 10 de soufflante sont retenues axialement dans les rainures 20 du disque 12 par l'intermédiaire de moyens appropriés montés sur le disque 12, en amont et en aval des aubes 10.

Les moyens de retenue situés en amont comprennent un flasque annulaire 28 rapporté et fixé coaxialement sur l'extrémité amont du disque 12.

Le flasque 28 comprend un rebord annulaire interne 30 qui est festonné ou crénelé et qui coopère avec un rebord annulaire externe 32 crénelé ou festonné du disque 12 pour immobiliser axialement le flasque 28 sur le disque 12. Ce flasque 28 prend appui par un rebord externe 34 sur les cales 24 des pieds d'aube 18.

Le flasque 28 comprend en outre une bride annulaire interne 36 qui est intercalée entre une bride annulaire 38 correspondante du disque 12 et une bride annulaire interne 40 d'une virole 42 agencée en amont du disque 12 de soufflante. Les brides 36, 38, 40 comprennent des orifices axiaux (non visibles) de passage de vis 44 ou analogues pour le serrage des brides entre elles.

La virole 42 a une forme sensiblement tronconique s'évasant vers l'aval, la paroi définie par les plates-formes inter-aubes s'étendant dans le prolongement axial de cette virole 42. Cette virole comporte des perçages 46 radiaux pour le montage de vis d'équilibrage ainsi qu'une bride 48 située à son extrémité amont. Un capot 50 de forme conique est monté sur la partie amont de la virole 42. Plus particulièrement, le capot 50 comporte une bride 52 à son extrémité aval, fixée à la bride amont 48 de la virole 42 par l'intermédiaire de vis 54.

En aval de l'aube 10, la retenue axiale est permise par un crochet 120 formé à l'extrémité aval de l'aube 10 et qui s'engage dans une encoche 122 formée à l'extrémité amont d'un compresseur 124 prolongeant la veine 26 en aval de la soufflante.

Une telle structure présente les inconvénients décrits plus haut. En particulier, elle ne convient pas à une soufflante ayant un diamètre relativement faible.

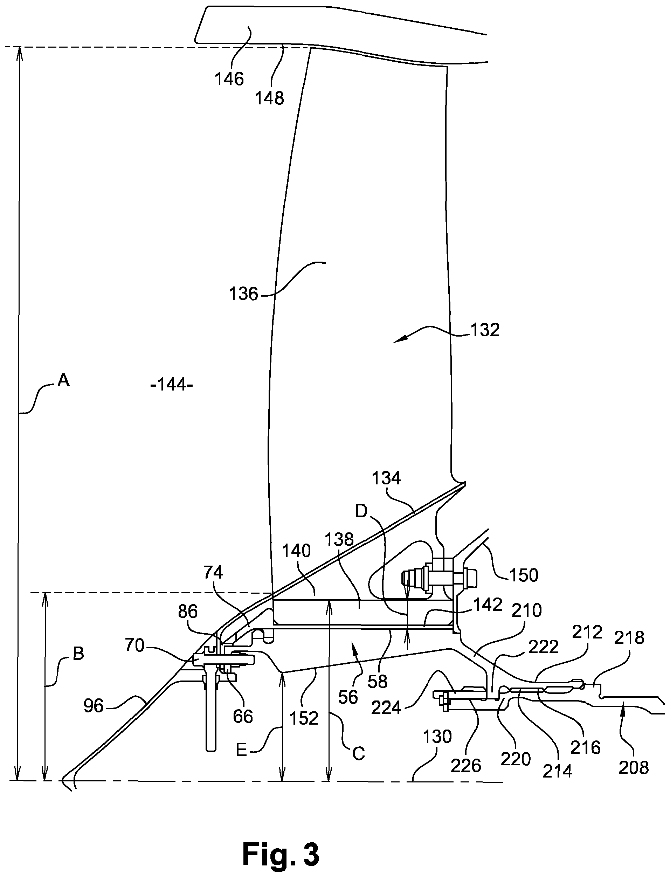

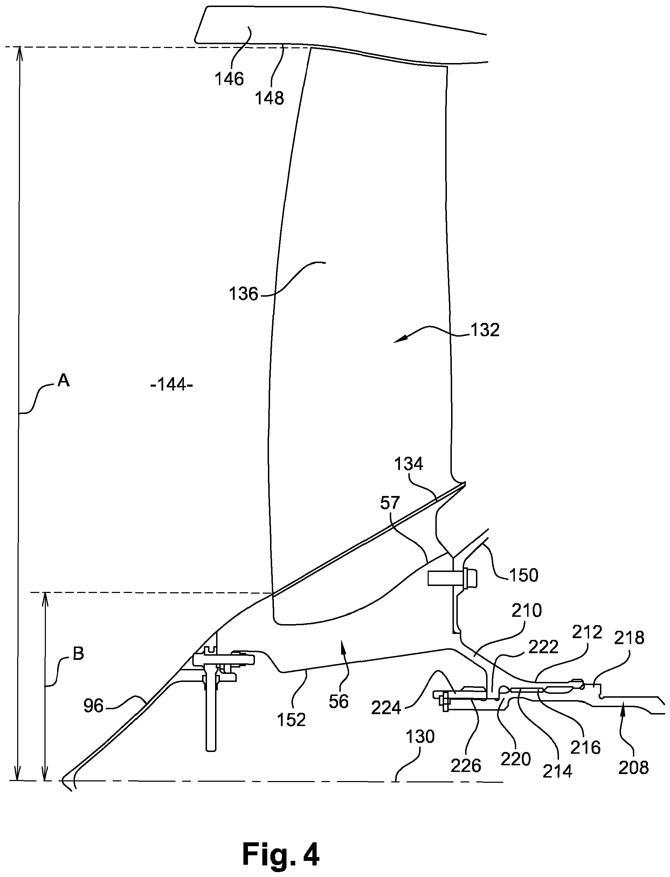

Les figures 3 et 4 illustrent une forme de réalisation d'une soufflante selon la solution développée dans cette demande de brevet et comportant, en ce qui concerne la figure 3 un disque 56 portant des aubes 132 dont les pieds 138 sont engagés dans des rainures 58 sensiblement axiales de la périphérie externe du disque 56, et pour la figure 4 un disque 56 formé d'une seule pièce avec les aubes 132.

Le disque 56 est agencé autour de l'axe 130 de la turbomachine, et est entrainé en rotation par un arbre 208 d'entrainement aval.

Plus particulièrement, le disque 56 est relié à une paroi tronconique 210 s'étendant vers l'aval du disque 56 en se refermant. La paroi tronconique 210 est reliée à son extrémité aval à une paroi cylindrique 212 dont la surface interne comprend des cannelures 214 axiales agencées circonférentiellement côte à côté. Ces cannelures 214, reliées directement au disque 56, sont engagées par coopération de forme avec des cannelures 216 complémentaires agencées sur la surface externe de l'arbre d'entrainement 208.

L'arbre 208 possède, formé sur sa surface externe en aval des cannelures 214, 216, un premier épaulement annulaire 218 coopérant par appui axial contre l'extrémité aval de la paroi cylindrique 212 reliée au disque 56 et portant les cannelures 214. Un second épaulement annulaire 220 formé en amont des cannelures 214, 216 est en appui axial contre un rebord annulaire 222 s'étendant radialement vers l'intérieur à partir de la paroi tronconique 210.

Un écrou 224 coopère avec un filetage 226 formé sur la surface externe de l'extrémité amont de l'arbre 208, et appuie axialement vers l'aval contre le rebord annulaire radial 222, afin que ce dernier, ainsi que l'extrémité aval de la paroi cylindrique 212, ne puissent se désengager de leurs appuis contre les épaulements 218, 220 de l'arbre 208. De cette manière, le disque 56 est contraint axialement, radialement et circonférentiellement par rapport à l'arbre d'entrainement 208.

Ce montage par cannelures entre le disque 56 et l'arbre 208 présente les avantages de tenue-mécanique décrits plus haut, en particulier pour les soufflantes de petite taille.

Pour le cas particulier de la figure 3, chaque aube 132 de soufflante comprend une pale 136 raccordée à son extrémité radialement interne à un pied 138 qui est engagé dans une rainure 58 sensiblement axiale de forme complémentaire du disque 56, formée entre deux nervures 140 du disque 56, et permettant de retenir radialement cette aube 132 sur le disque 56.

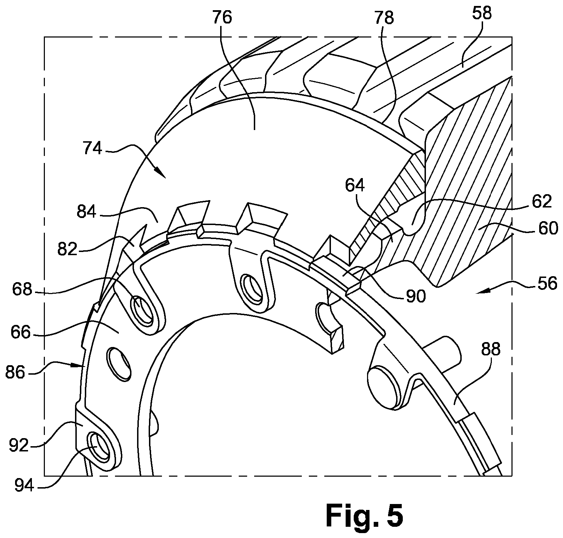

Les aubes 132 de soufflante sont retenues axialement dans les rainures 58 du disque 56 par l'intermédiaire des moyens 74, 86, 70, 96 décrits plus bas en référence aux figures 5 à 9 et agencés en amont des aubes 132.

Une cale 142 est intercalée entre le pied 138 de chaque aube 132 et le fond de la rainure 58 correspondante du disque 56 pour immobiliser radialement l'aube 132 sur le disque 56.

Des plates-formes inter-aubes 134 sont intercalées circonférentiellement entre les aubes 132. Les plates-formes 134 inter-aubes forment une paroi qui délimite intérieurement la veine 144 du flux d'air entrant dans la turbomachine, et comprennent des moyens qui coopèrent avec des moyens correspondants prévus sur le disque 56, entre les rainures 58, pour fixer les plates-formes sur le disque.

Les aubes 132 sont entourées par un carter annulaire externe 146 délimitant l'entrée d'air de la turbomachine. Le carter externe 146 comprend une paroi annulaire interne 148 délimitant extérieurement la veine 144 du flux d'air entrant dans la turbomachine, et au regard de laquelle les extrémités externes des aubes 132 se déplacent circonférentiellement en rotation.

Le rapport de moyeu de la soufflante représentée correspond au rapport de la distance B entre l'axe 130 de la turbomachine et la limite interne de la veine 144 au niveau du bord d'attaque de l'aube 132, divisé par la distance A entre l'axe 130 de la turbomachine et les extrémités externes des aubes 132. La soufflante représentée a été conçue de manière a obtenir un rapport de moyeu pouvant être compris entre 0.25 et 0.27, alors que la distance A possède une valeur comprise entre 450 et 600 mm. Ce choix de rapport de moyeu implique l'utilisation d'un disque dont la limite externe, aux sommets des nervures, est à une distance C de l'axe 130 comprise entre 115 mm et 145 mm.

Enfin, les moyens 74, 86, 70, 96 de retenue axiale des aubes 132, qui seront décrits par la suite, sont assez efficaces pour que, contrairement à la soufflante de l'art antérieur représentée en figures 1 et 2, la soufflante selon l'invention représentée en figures 3 soit dépourvue de crochets de retenue axiale des aubes 132 agencés en aval des aubes 132. Au contraire, comme on peut le voir, le compresseur basse pression 150 agencé en aval du disque 56 de soufflante est directement en appui contre les extrémités aval des pieds d'aubes 138 et des nervures 140 du disque. Il n'existe donc plus de contrainte de profondeur radiale des nervures liée à l'engagement des crochets aval.

Par conséquent, les rainures 58 sont radialement moins profondes, avec une hauteur D comprise entre 18 mm et 22 mm, que les rainures adaptées pour la mise en place d'un crochet de retenu axial des aubes. Les cales 142, utilisées pour maintenir les pieds d'aubes 138 en appui radial contre les nervures 140, sont aussi radialement moins épaisses. Les nervures 140, par le même fait moins allongées, sont alors suffisamment compactes pour résister aux déformations et à la rupture. Ce gain en résistance des nervures 140 autorise à former le disque en un alliage de titane relativement léger par rapport à un alliage d'inconel par exemple.

De plus, en considérant la nouvelle répartition de masse du disque qui découle de la modification de la hauteur des rainures, la paroi interne du disque 56 a été formée de manière à présenter un profil d'équilibrage 152 du disque 56 différent par rapport à celui de l'art antérieur présentant des poireaux. Ce profil 152 de la paroi est tronconique s'évasant vers l'aval, et est formé par alésage. Proportionnellement au disque, ce profil d'équilibrage 152 s'étend moins que les poireaux vers l'intérieur de la turbomachine, jusqu'à un rayon E minimum compris dans le cadre de l'invention entre 60 mm et 70 mm, ce qui représente la limite interne du disque. De ce fait, ce profil d'équilibrage 152 est situé radialement à l'extérieur de l'écrou 224 de serrage du disque 56 sur l'arbre d'entrainement 208. Ce profil 152 autorise donc le passage d'outils plus volumineux dans l'espace d'accès axial par l'amont situé autour de l'axe 130 du disque 56, et indispensables au montage de la soufflante.

Pour le cas particulier de la figure 4, le disque 56 est formé d'une seule pièce avec les aubes 132, les aubes s'étendant depuis la surface externe 57 du disque 56. Il n'est donc pas nécessaire de former de moyens de blocage axial des aubes. Le montage particulier du disque 56 sur l'arbre d'entrainement 208 à l'aide de l'écrou 224 reste possible, car on peut former le profil d'équilibrage 152 de la même manière que pour la figure 3.

On se réfère maintenant aux figures 5 à 9 qui illustrent plus particulièrement les moyens de rétention axiale des aubes, dans le cas décrit en référence à la figure 3. Le disque comporte une jante 60 annulaire dépourvue de poireaux d'équilibrage et prolongée à l'amont par une partie annulaire comportant une gorge annulaire 62 délimitée entre une face amont de la jante et un rebord radial 64 s'étendant vers l'extérieur. L'extrémité amont de la partie annulaire comporte une bride 66 s'étendant radialement vers l'intérieur et écartée du rebord 64, et comportant, régulièrement répartis sur toute sa circonférence, des trous axiaux 68 de passage de vis 70, 72. Le rebord 64 est festonné ou crénelé et comprend des parties pleines en alternance avec des parties creuses.

Le rotor de soufflante est équipé de moyens de retenue axiale vers l'amont des aubes sur le disque. Ceux-ci comportent un flasque 74 montée dans la gorge annulaire 62 du disque 56 et formant un appui axial des pieds des aubes.

Le flasque 74 comprend une paroi sensiblement tronconique 76 s'évasant vers l'aval, et dont l'épaisseur augmente vers l'aval. Le flasque 74 est délimité à son extrémité aval par une face radiale 78 d'appui contre les aubes. Le flasque 74 comprend à son extrémité aval un rebord annulaire interne 80 qui est festonné ou crénelé et comprend des parties pleines en alternance avec des parties creuses et a des formes sensiblement complémentaires de celles du rebord 64 du disque 56 pour autoriser un montage et un démontage du flasque 74 dans la gorge annulaire 62 par translation axiale, une rotation du flasque 74 par rapport au disque 56, et un blocage axial du flasque 74 dans la gorge 62 du disque par appui des parties pleines du rebord 80 du flasque contre les parties pleines du rebord 64 du disque.

Le flasque 74 comprend enfin des festons 82 ou parties creuses formés en alternance avec des parties pleines 84 sur son bord amont.

Le flasque 74 est immobilisé en rotation au moyen d'un anneau 86 comportant une partie cylindrique 88 délimité par des faces cylindriques interne et externe. La face externe comporte des saillies 90 s'étendant radialement vers l'extérieur et circonférentiellement le long de la dite surface externe de la partie cylindrique 88, et s'insérant dans les festons 82 du bord amont du flasque 74 et réalisant une butée contre les parties pleines 84 du bord amont du flasque 74 pour assurer l'anti-rotation. Le bord amont de l'anneau est relié à des oreilles 92 s'étendant radialement vers l'intérieur, formées avec des trous 94 de passage de vis. Ces oreilles sont en contact axial par l'amont contre la bride 66 du disque 56 de manière à ce que les trous 94 des oreilles 92 soient alignés avec les trous 68 de la bride 66 et la partie cylindrique 88 de l'anneau est en appui axial par l'extérieur contre la bride 66 du disque. L'anneau 86 peut être réalisé en acier fortement allié, de façon à résister à l'arrachement.

Le flasque 74 est ainsi immobilisé en rotation par butée de ses parties pleines 84 contre les saillies 90 de l'anneau.

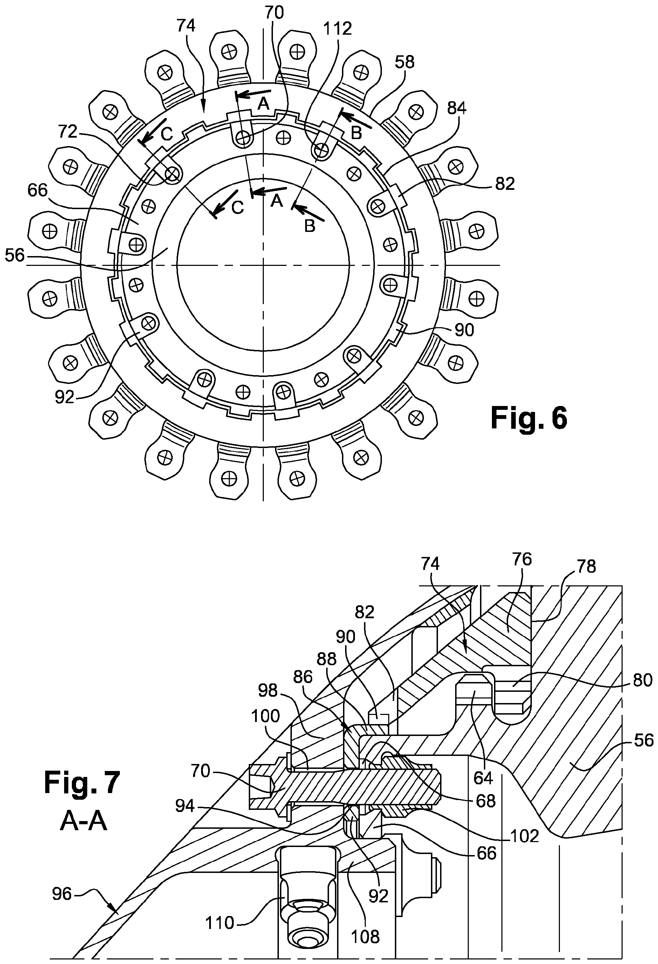

Un capot 96, par exemple en aluminium et de forme conique, est fixé sur le disque 12. Pour cela, le capot 96 comporte, dans sa partie médiane, un rebord annulaire 98 interne dans lequel sont formés des trous axiaux 100 traversants (figure 7), situés en regard d'un trou 94 sur deux de l'anneau 86 alignés avec certains trous 68 de la bride 66 du disque 56. Ces trous 100 sont traversés par les vis 70 coopérant avec des écrous 102 logés contre l'aval de la bride 66 du disque 56 et permettant de fixer ensemble le capot 96, l'anneau 86 et le disque 56. La partie aval du capot 96 recouvre l'anneau 86 et le flasque 74 de façon à ce que la veine intérieure 26 définie par les plates-formes inter-aubes s'étende dans le prolongement axial de la partie aval du capot 96.

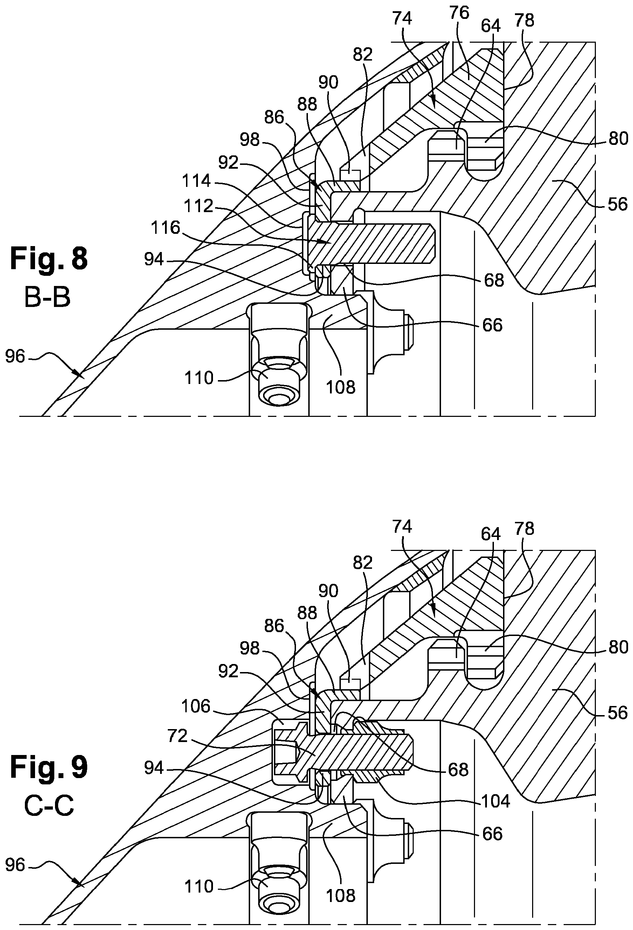

Comme cela est visible en figure 9, tous les autres trous 94 de l'anneau sauf un, situés en regard d'autres trous 68 de la bride 66 du disque 56, sont traversés par des vis 72 coopérant avec des écrous 104 et servant uniquement à la fixation de l'anneau 86 sur le disque 56. Les têtes de ces vis sont logées dans des trous borgnes 106 ménagés dans le rebord interne 98 du capot 96.

Le rebord interne 98 du capot 96 comprend également une collerette cylindrique 108 s'étendant vers l'aval, dont l'extrémité vient en appui contre l'extrémité interne de la bride 66 du disque.

Le capot 96 comporte en outre des filetages radiaux 110 servant au montage de vis d'équilibrage, comme cela est bien connu de l'art antérieur. Afin de garantir la bonne position de ces vis, il est nécessaire d'indexer la position du capot 96 par rapport au rotor de soufflante. Pour cela, comme représenté à la figure 8, un pion d'indexage 112 est monté dans le dernier trou 94 de l'anneau aligné avec un trou 68 de la bride 66 du disque 56. Le pion 112 comporte une tête 116 logée dans un trou borgne 114 du rebord interne 98 du capot 96, le diamètre de la tête 116 du pion 112 étant déterminé de façon à ce qu'il ne puisse pas être inséré dans un autre trou borgne 106, prévu pour le logement des têtes des vis 72.

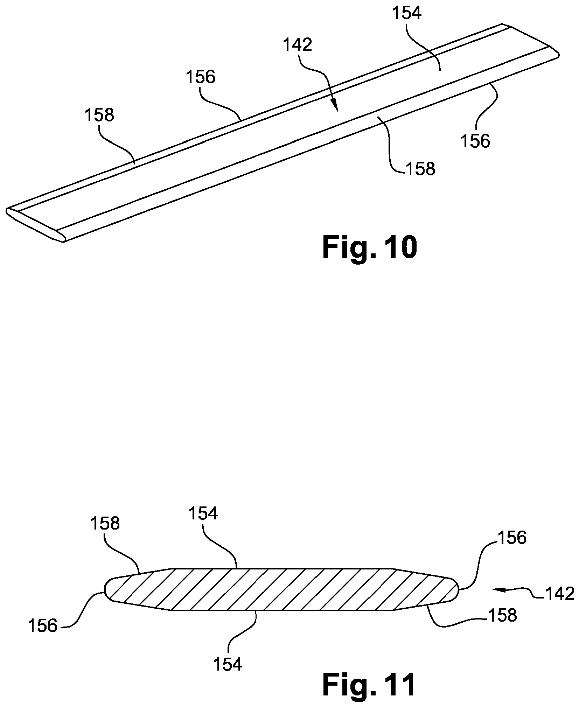

On se réfère maintenant aux figures 10 et 11 qui représentent les cales 142, ces dernières ayant été adaptées à la réduction de profondeur des rainures 58. Chaque cale se présente plus particulièrement sous la forme d'une planche à deux faces 154 allongée selon l'axe de la soufflante, et posée contre le fond d'une des rainures 58. Cette cale est symétrique dans les trois directions axiales, radiales, et circonférentielle, ce qui évite d'éventuelles erreurs de montage. Chaque face de la cale possède ses bords latéraux 156, ou circonférentiels, chanfreinés, les chanfreins 158 formant chacun un angle de 10° avec une face. Les chanfreins 158 de chaque face 154 radialement en vis-à-vis se rejoignent aux extrémités latérales de la cale de manière à former les deux bords latéraux 156 de la cale. Les angles de jonction entre les faces 154 de la cale et les chanfreins 158 sont adoucis de manière à présenter une courbure de rayon compris entre 1,50 mm et 1, 80 mm, et plus particulièrement égal à 1,65 mm. Les angles de jonctions entre les chanfreins 158 respectifs formant les bords latéraux 156 de la cale sont adoucis de manière à présenter une courbure de rayon compris entre 0,45 mm et 0,75 mm, et plus particulièrement égal à 0,6 mm. Chaque cale 142 possède une épaisseur radiale comprise entre 1 mm et 3 mm, plus particulièrement égale à 2 mm, et une dimension latérale comprise entre 17,0 mm et 18,2 mm, plus particulièrement égal à 17,6 mm.

## Revendications

1. Soufflante pour turbomachine , la soufflante comprenant en entrée des aubes (132) de soufflante, un carter annulaire, un moyeu tournant autour d'un axe (130) de la turbomachine et une veine annulaire (144) délimitée intérieurement par le moyeu et extérieurement par le carter annulaire (146), le moyeu portant les aubes de soufflante, lesquelles s'étendent radialement par rapport audit axe, dans la veine annulaire (144), ladite soufflante présentant un diamètre d'entrée, qui correspond au diamètre du cercle comprenant les extrémités radialement externes des aubes (132) de soufflante, de valeur comprise entre 900 mm et 1200 mm, **caractérisée en ce que** :
- elle présente un rapport de moyeu, qui correspond au rapport du diamètre de la limite interne de la veine annulaire (144) au niveau des extrémités radialement internes des bords d'attaques des aubes de soufflante, divisé par le diamètre d'entrée, de valeur comprise entre 0,20 et 0,265,
- le moyeu comprend un disque (56) de soufflante comportant à sa périphérie externe des nervures (140) sensiblement axiales formées en alternance avec des rainures (58) dans lesquels sont situés des pieds (138) que présentent les aubes (132) de soufflante, et
- le disque (56) de soufflante présente :
-- une limite externe formée par les extrémités externes des nervures (140) et dont le diamètre est compris entre 245 mm et 275 mm, et
-- une limite interne formée par l'extrémité interne d'un profil d'équilibrage (152) du disque de soufflante, avec :
--- ladite limite interne qui présente un diamètre compris entre 120 mm et 140 mm, et/ou
--- lesdites rainures (58) du disque de soufflante qui possèdent une dimension radiale, entre le fond des rainures (58) et le sommet des nervures (140), de valeur comprise entre 18 mm et 22 mm,
le profil d'équilibrage du disque (56) étant formé par un alésage interne dont la forme est tronconique s'évasant vers l'aval, une extrémité amont de l'alésage interne formant la limite interne du disque.

2. Soufflante pour turbomachine, la soufflante comprenant en entrée des aubes (132) de soufflante, un carter annulaire (146), un moyeu tournant autour d'un axe (130) de la turbomachine et une veine annulaire (144) délimitée intérieurement par le moyeu et extérieurement par le carter annulaire (146), le moyeu portant les aubes de soufflante, lesquelles s'étendent radialement par rapport audit axe dans la veine annulaire (144), ladite soufflante présentant un diamètre d'entrée, qui correspond au diamètre du cercle comprenant les extrémités radialement externes des aubes de soufflante, de valeur comprise entre 900 mm et 1200 mm, **caractérisée en ce que** :
- elle présente un rapport de moyeu, qui correspond au rapport du diamètre de la limite interne de la veine annulaire (144) au niveau des extrémités radialement internes des bords d'attaques des aubes de soufflante, divisé par le diamètre d'entrée, de valeur comprise entre 0,20 et 0,265,
- le moyeu comprend un disque de soufflante (56) formé d'une seule pièce avec les aubes (132) de soufflante,
- le disque (56) possède une limite interne, formée par l'extrémité interne d'un profil d'équilibrage du disque, dont le diamètre est compris entre 120 mm et 140 mm, et
- le profil d'équilibrage du disque (56) est formé par un alésage interne dont la forme est tronconique s'évasant vers l'aval, l'extrémité amont de cet alésage formant la limite interne du disque.

3. Soufflante selon la revendication 1 ou 2, **caractérisée en ce que** ledit diamètre de la limite interne de la veine annulaire (144) au niveau des extrémités radialement internes des bords d'attaques des aubes de soufflante (132) est compris entre 225mm et 318mm.

4. Soufflante selon la revendication 1 ou 3 non rattachée à la revendication 2, **caractérisée en ce que** le rapport de moyeu est compris entre 0.25 et 0.265, alors que le ladite limite externe du disque (56) de soufflante est située à une distance (C) dudit axe (130) comprise entre 115 mm et 145 mm.

5. Soufflante selon la revendication 1 ou 3 ou 4 non rattachée à la revendication 2, comprenant un agencement de blocage axial des aubes (132) de soufflante comprenant un capot (96) annulaire monté sur le disque (56) de soufflante en amont des aubes (132) de soufflante, et des moyens (62,74) de retenue axiale des aubes de soufflante sur le disque (56) de soufflante comportant un flasque (74) monté dans une gorge (62) annulaire du disque de soufflante et formant un appui axial des pieds (138) des aubes de soufflante, le flasque (74) comportant un rebord (30) annulaire radial festonné et coopérant avec un rebord (32) annulaire radial festonnée de la gorge (62) annulaire du disque de soufflante, de manière à assurer un blocage axial du flasque dans la gorge annulaire du disque de soufflante, et des moyens (86, 92, 94) d'immobilisation en rotation du flasque, comportant un anneau (86) pourvu d'oreilles (92) s'étendant radialement vers l'intérieur et formées avec des moyens (94) de fixation sur une face radiale amont du disque de soufflante, ledit capot (96) étant fixé sur le disque (56) de soufflante par des moyens (98,100) de fixation communs aux moyens (94) de fixation d'au moins certaines oreilles (92) de l'anneau (86) sur le disque de soufflante, l'anneau (86) comportant en outre au moins une saillie radiale (90) coopérant avec une butée (84) complémentaire du flasque (74), de manière à bloquer en rotation le flasque (74) par rapport à l'anneau (86).

6. Soufflante selon l'une des revendications précédentes, **caractérisée en ce que** :
- le disque de soufflante comprend une rangée annulaire de cannelures (214) axiales du disque (56) coopérant avec une rangée annulaire de cannelures (216) axiales d'un arbre (208) d'entrainement aval centré sur l'axe (130), de manière à assurer une transmission de couple entre le disque de soufflante et l'arbre,- les cannelures (214) du disque (56) sont formées sur la surface intérieure d'une paroi cylindrique (212) du disque, la dite paroi cylindrique (212) entourant l'arbre d'entrainement (208),- la surface cylindrique (212) est formée à l'extrémité aval du disque (56) et est reliée au reste du disque de soufflante par l'intermédiaire d'une paroi tronconique (210) s'évasant vers l'amont, au moins un épaulement annulaire (218, 220) est formé sur la surface de l'arbre d'entrainement (208), et étant en appui axial par l'aval contre une butée (212, 222) du disque (56) de soufflante, les butées (212, 222) sont en outre formées par l'extrémité aval de la paroi cylindrique (212) et/ou un rebord annulaire radial (222) s'étendant à l'intérieur de la paroi tronconique (210), et un écrou (224) est monté sur un filetage de la surface externe de l'extrémité amont de l'arbre (208), et formant un appui axial depuis l'amont sur au moins une butée (222) du disque (56) de soufflante, de manière à maintenir la butée serrée axialement entre ledit écrou et un épaulement (220) de l'arbre (208).

7. Soufflante selon la revendication 6, **caractérisée en ce que** l'écrou (224) possède un diamètre compris entre 105 mm et 135 mm, et de préférence compris entre 115 mm et 125 mm.

8. Soufflante selon l'une des revendications précédentes, non rattachée à la revendication 2, **caractérisée en ce qu'**une cale (142) d'épaisseur radiale comprise entre 1 mm et 3 mm est intercalée radialement entre un pied d'aube (138) et un fond de rainure (58).

9. Soufflante selon l'une des revendications précédentes, **caractérisée en ce que** le disque porte entre 17 et 21 aubes de soufflante.

10. Soufflante selon l'une des revendications précédentes, **caractérisée en ce que** le disque est en alliage de titane, et plus particulièrement en alliage TA6V ou TI17 (TA5CD4)).

11. Turboréacteur **caractérisé en ce qu'**il comporte une soufflante selon l'une des revendications précédentes.

## Patentansprüche

1. Gebläse für ein Turbotriebwerk, wobei das Gebläse eintrittsseitig Gebläseschaufeln (132), ein ringförmiges Gehäuse, eine Nabe, die sich um eine Achse (130) des Turbotriebwerks dreht, und einen ringförmigen Strömungskanal (144) enthält, der innen von der Nabe und außen von dem ringförmigen Gehäuse (146) begrenzt ist, wobei die Nabe die Gebläseschaufeln trägt, die sich in dem ringförmigen Strömungskanal (144) radial bezüglich der Achse erstrecken, wobei das Gebläse einen Eintrittsdurchmesser aufweist, der dem Durchmesser des Kreises entspricht, der die radial äußeren Enden der Gebläseschaufeln (132) umfasst, und zwischen 900 mm und 1200 mm beträgt,
**dadurch gekennzeichnet, dass**
- es ein Nabenverhältnis aufweist, das dem Verhältnis des Durchmessers der inneren Begrenzung des ringförmigen Strömungskanals (144) an den radial inneren Enden der Vorderkanten der Gebläseschaufeln, geteilt durch den Eintrittsdurchmesser, entspricht und zwischen 0,20 und 0,265 beträgt,
- die Nabe eine Gebläsescheibe (56) umfasst, die an ihrem Außenumfang im Wesentlichen axial verlaufende Rippen (140) aufweist, die abwechselnd mit Nuten (58) ausgebildet sind, in die Schaufelfüße (138) der Gebläseschaufeln (132) eingreifen, und
- die Gebläsescheibe (56) aufweist:
-- eine äußere Begrenzung, die aus den äußeren Enden der Rippen (140) besteht und deren Durchmesser zwischen 245 mm und 275 mm liegt, und
-- eine innere Begrenzung, die aus dem inneren Ende eines Ausgleichsprofils (152) der Gebläsescheibe besteht, wobei
--- die innere Begrenzung einen Durchmesser zwischen 120 mm und 140 mm aufweist, und/oder
--- die Nuten (58) der Gebläsescheibe zwischen dem Nutgrund der Nuten (58) und dem Scheitel der Rippen (140) eine radiale Abmessung zwischen 18 mm und 22 mm aufweisen,
wobei das Ausgleichsprofil der Scheibe (56) aus einer inneren Bohrung gebildet ist, deren Form kegelstumpfförmig ist und sich nach stromabwärts erweitert, wobei ein stromaufwärts gelegenes Ende der inneren Bohrung die innere Begrenzung der Scheibe bildet.

2. Gebläse für ein Turbotriebwerk, wobei das Gebläse eintrittsseitig Gebläseschaufeln (132), ein ringförmiges Gehäuse (146), eine Nabe, die sich um eine Achse (130) des Turbotriebwerks dreht, und einen ringförmigen Strömungskanal (144) enthält, der innen von der Nabe und außen von dem ringförmigen Gehäuse (146) begrenzt ist, wobei die Nabe die Gebläseschaufeln trägt, die sich in dem ringförmigen Strömungskanal (144) radial bezüglich der Achse erstrecken, wobei das Gebläse einen Eintrittsdurchmesser aufweist, der dem Durchmesser des Kreises entspricht, der die radial äußeren Enden der Gebläseschaufeln umfasst, und zwischen 900 mm und 1200 mm beträgt,
**dadurch gekennzeichnet, dass**
- es ein Nabenverhältnis aufweist, das dem Verhältnis des Durchmessers der inneren Begrenzung des ringförmigen Strömungskanals (144) an den radial inneren Enden der Vorderkanten der Gebläseschaufeln, geteilt durch den Eintrittsdurchmesser, entspricht und zwischen 0,20 und 0,265 beträgt,
- die Nabe eine Gebläsescheibe (56) umfasst, die einstückig mit den Gebläseschaufeln (132) ausgebildet ist,
- die Scheibe (56) eine innere Begrenzung aufweist, die aus dem inneren Ende eines Ausgleichsprofils der Scheibe besteht und deren Durchmesser zwischen 120 mm und 140 mm liegt, und
- das Ausgleichsprofil der Scheibe (56) aus einer inneren Bohrung gebildet ist, deren Form kegelstumpfförmig ist und sich nach stromabwärts erweitert, wobei das stromaufwärts gelegene Ende dieser Bohrung die innere Begrenzung der Scheibe bildet.

3. Gebläse nach Anspruch 1 oder 2,
**dadurch gekennzeichnet, dass** der Durchmesser der inneren Begrenzung des ringförmigen Strömungskanals (144) an den radial inneren Enden der Vorderkanten der Gebläseschaufeln (132) zwischen 225 mm und 318 mm beträgt.

4. Gebläse nach Anspruch 1 oder 3 unabhängig von Anspruch 2,
**dadurch gekennzeichnet, dass** das Nabenverhältnis zwischen 0,25 und 0,265 beträgt, während die äußere Begrenzung der Gebläsescheibe (56) in einer Entfernung (C) von der Achse (130) liegt, die zwischen 115 mm und 145 mm beträgt.

5. Gebläse nach Anspruch 1 oder 3 oder 4 unabhängig von Anspruch 2, enthaltend eine Anordnung zur axialen Sicherung der Gebläseschaufeln (132), die eine ringförmige Abdeckhaube (96) umfasst, die stromaufwärts der Gebläseschaufeln (132) an der Gebläsescheibe (56) montiert ist, sowie Mittel (62, 74) zum axialen Halten der Gebläseschaufeln an der Gebläsescheibe (56), die einen Flansch (74) umfassen, der in einer ringförmigen Hohlkehle (62) der Gebläsescheibe montiert ist und eine axiale Abstützung der Schaufelfüße (138) der Gebläseschaufeln bildet, wobei der Flansch (74) eine ringförmige, radial verlaufende, wellenförmige Randleiste (30) aufweist, die mit einer ringförmigen, radial verlaufenden, wellenförmigen Randleiste (32) der ringförmigen Hohlkehle (62) der Gebläsescheibe zusammenwirkt, um eine axiale Sicherung des Flansches in der ringförmigen Hohlkehle der Gebläsescheibe sicherzustellen, sowie Mittel (86, 92, 94) zur Drehsicherung des Flansches, die einen Ring (86) mit Lappen (92) umfassen, die sich radial nach innen erstrecken und mit Befestigungsmitteln (94) zur Befestigung an einer radial stromaufwärts gelegenen Seite der Gebläsescheibe ausgebildet sind, wobei die Abdeckhaube (96) an der Gebläsescheibe (56) über Befestigungsmittel (98, 100) befestigt ist, die den Befestigungsmitteln (94) mindestens einiger Lappen (92) des Rings (86) an der Gebläsescheibe gemeinsam sind, wobei der Ring (86) ferner mindestens einen radialen Vorsprung (90) aufweist, der mit einem Gegenanschlag (84) des Flansches (74) zusammenwirkt, um den Flansch (74) in Bezug auf den Ring (86) drehfest zu sichern.

6. Gebläse nach einem der vorhergehenden Ansprüche,
**dadurch gekennzeichnet, dass**
- die Gebläsescheibe eine ringförmige Aneinanderreihung von axialen Rillen (214) der Scheibe (56) umfasst, die mit einer ringförmigen Aneinanderreihung von axialen Rillen (216) einer stromabwärts gelegenen Antriebswelle (208) zusammenwirken, die auf der Achse (130) zentriert ist, um eine Drehmomentübertragung zwischen der Gebläsescheibe und der Welle zu gewährleisten,
- die Rillen (214) der Scheibe (56) an der Innenfläche einer zylindrischen Wand (212) der Scheibe ausgebildet sind, wobei die zylindrische Wand (212) die Antriebswelle (208) umgibt,
- die zylindrische Fläche (212) am stromabwärts gelegenen Ende der Scheibe (56) ausgebildet und mit der restlichen Gebläsescheibe über eine kegelstumpfförmige Wand (210) verbunden ist, die sich nach stromaufwärts erweitert, wobei zumindest eine ringförmige Schulter (218, 220) an der Oberfläche der Antriebswelle (208) ausgebildet ist und von stromabwärts axial gegen einen Anschlag (212, 222) der Gebläsescheibe (56) abgestützt ist, wobei ferner die Anschläge (212, 222) aus dem stromabwärts gelegenen Ende der zylindrischen Wand (212) und/oder einer ringförmigen, radial verlaufenden Randleiste (222) gebildet sind, die sich innerhalb der kegelstumpfförmigen Wand (210) erstreckt, und wobei eine Mutter (224) auf ein Außengewinde der Außenfläche des stromaufwärts gelegenen Endes der Welle (208) geschraubt ist und eine axiale Abstützung von stromaufwärts an zumindest einem Anschlag (222) der Gebläsescheibe (56) bildet, so dass der Anschlag zwischen der Mutter und einer Schulter (220) der Welle (208) axial verspannt gehalten wird.

7. Gebläse nach Anspruch 6,
**dadurch gekennzeichnet, dass** die Mutter (224) einen Durchmesser zwischen 105 mm und 135 mm, vorzugsweise zwischen 115 mm und 125 mm, aufweist.

8. Gebläse nach einem der vorhergehenden Ansprüche,
**dadurch gekennzeichnet, dass** ein Keil (142) mit einer radialen Dicke zwischen 1 mm und 3 mm radial zwischen einem Schaufelfuß (138) und einem Nutgrund der Nuten (58) eingefügt ist.

9. Gebläse nach einem der vorhergehenden Ansprüche,
**dadurch gekennzeichnet, dass** die Scheibe zwischen 17 und 21 Gebläseschaufeln trägt.

10. Gebläse nach einem der vorhergehenden Ansprüche,
**dadurch gekennzeichnet, dass** die Scheibe aus einer Titanlegierung besteht, insbesondere aus der Legierung TA6V oder TI17 (TA5CD4).

11. Turbostrahltriebwerk,
**dadurch gekennzeichnet, dass** es ein Gebläse nach einem der vorhergehenden Ansprüche aufweist.

## Claims

1. Fan for a turbomachine, the fan comprising fan blades (132) at an intake, an annular casing (146), a hub rotating around an axis (130) of the turbomachine and an annular stream (144) delimited internally by the hub and externally by the annular casing (146), the hub bearing the blades, which extend radially relative to said axis in the annular stream (144), said fan having an intake diameter (A), which corresponds to the diameter of the circle comprising the radially outer ends of the fan blades (132), of a value of between 900 mm and 1200 mm,
**characterized in that**:
- it has a hub ratio, which corresponds to a ratio of the diameter (B) of the inner limit of the annular stream (144) at the radially inner ends of the leading edges of the fan blades, divided by the intake diameter, of a value of between 0.20 and 0.265,
- the hub comprises a fan disc (56) comprising at an outer circumference substantially axial ribs (140) formed in alternation with grooves (58) in which roots (138) of the fan blades (132) are disposed, and
- the fan disc (56) has:
-- an outer limit, formed by outer ends of the ribs (140), a diameter of which is between 245 mm and 275 mm, and
-- an inner limit, formed by an inner end of a balancing profile of the fan disc, with
--- a diameter of which is between 120 mm and 140 mm, and/or
--- said grooves (58) of the fan disc have a radial dimension between the bottom of the grooves (58) and the top of the ribs (140), of a value between 18 mm and 22 mm,
the balancing profile of the disc (56) being formed by an internal bore of a truncated cone shape flaring out downstream, an upstream end of the internal bore forming the inner limit of the disc.

2. Fan for a turbomachine, the fan comprising fan blades (132) at an intake, an annular casing (146), a hub rotating around an axis (130) of the turbomachine and an annular stream (144) delimited internally by the hub and externally by the annular casing (146), the hub bearing the blades, which extend radially relative to said axis in the annular stream (144), said fan having an intake diameter (A), which corresponds to the diameter of the circle comprising the radially outer ends of the fan blades (132), of a value of between 900 mm and 1200 mm,
**characterized in that**:
- it has a hub ratio, which corresponds to a ratio of the diameter (B) of the inner limit of the annular stream (144) at the radially inner ends of the leading edges of the fan blades, divided by the intake diameter, of a value of between 0.20 and 0.265,
- the hub comprises a fan disc (56) constructed in one piece with the fan blades (132),
- the disc (56) has an inner limit, formed by an inner end of a balancing profile of the disc, a diameter of which is comprised between 120 mm and 140 mm, and
- the balancing profile of the disc (56) is formed by an internal bore of a truncated cone shape flaring out downstream, the upstream end of this internal bore forming the inner limit of the disc.

3. Fan according to claim 1 or 2, **characterized in that** said diameter of the inner limit of the annular stream (144) at the radially inner ends of the leading edges of the fan blades is between 225 mm and 318 mm.

4. Fan according claim 1 or 3 not attached to claim 2, **characterized in that** said hub ratio is between 0.25 and 0.265, while said outer limit of the fan disk (56) is located at a distance (C) from said axis (130) between 115 mm and 145 mm.

5. Fan according claim 1 or 3 or 4 not attached to claim 2, comprising an arrangement of axial securing of the blades (132) comprising of an annular cowling (96) mounted on the fan disc (56) upstream from the fan blades (32) and means (62, 74) of axial retention of the fan blades on the fan disc (56) comprising a flange (74) installed in an annular recess (62) of the disc and forming an axial abutment of the fan blade roots (138), the flange (74) comprising a scalloped radial annular edge (30) interacting with a scalloped radial annular edge (32) of the annular recess (62) of the fan disc, so as to ensure annular securing of the flange in the annular recess of the fan disc, and means (86, 92, 94) of preventing rotation of the flange, comprising a ring (86) equipped with ears (92) extending radially towards the inside and formed with means (94) for fixing on an upstream radial face of the disc, said cowling (96) being fixed to the disc (56) by means (98, 100) of fixing common to the means (94) of fixing of at least some ears (92) of the ring (86) on the fan disc, the ring (86) further comprising at least one radial protrusion (90) interacting with an stop (84) complementary of the flange (74), so as to prevent rotation of the flange (74) relative to the ring (86).

6. Fan according to one of the preceding claims, **characterized in that**:
- the disc comprises an annular row of axial splines (214) of the disc (56) that interact with an annular row of axial splines (216) of a downstream drive shaft (208) centered on the axis (130), so as to ensure a torque transmission between the disc and the shaft,
- the splines (214) of the disc (56) are formed on the inside surface of a cylindrical wall (212) of the disc, wherein said cylindrical wall (212) surrounds the drive shaft (208),
- the cylindrical surface (212) is formed at a downstream end of the disc (56) and is connected to the remainder of the disc via a truncated cone shaped wall (210) flaring out in the upstream direction, at least one annular shoulder (218, 220) being formed on a surface of the drive shaft (208) and being in axial abutment downstream against a stop (212, 222) on the fan disc (56), the stops (212, 222) are further formed by a downstream end of the cylindrical wall (212) and/or a radial annular edge (222) extending inside the truncated cone-shaped wall (210), and a nut (224) is disposed on a thread of the outer surface of an upstream end of the shaft (208) and forming an axial abutment from the upstream direction on at least one stop (222) of the fan disc (56), in order to maintain the stop clamped axially between said nut and a shoulder (220) of the shaft (208).

7. Fan according to claim 6, **characterized in that** the nut (224) has a diameter of between 105 mm and 135 mm and preferably of between 115 mm and 125 mm.

8. Fan according to any of the preceding claims, **characterised in that** a shim (142) with a radial thickness of between 1 mm and 3 mm is interposed radially between one of said blade roots (138) and one of said groove bottoms (58).

9. Fan according to any of the preceding claims, **characterised in that** the disc bears between 17 and 21 blades, preferentially between 18 and 20 blades.

10. Fan according to any of the preceding claims, **characterised in that** the disc is made of titanium alloy and more specifically TA6V or TU 7 (TA5CD4) alloy.

11. Turbojet engine, **characterised in that** it comprises a fan according to any of the above claims.
